# EUROPÄISCHE PATENTSCHRIFT

(11) **EP 1 420 037 B1**
(45) Veröffentlichungstag und Bekanntmachung des Hinweises auf die Patenterteilung: **01.03.2006**
(21) Anmeldenummer: 02025254.0
(22) Anmeldetag: 12.11.2002
(51) Int. Cl.: C08G 73/00, C08G 73/10, H01M 8/00, H01M 8/10, C08J 5/00, C08J 5/20, C08J 5/22

(54) **Ionenleitende Membran für elektrochemische Anwendungen**
Ion conducting membrane for electrochemical applications
Membrane avec conductivité ionique pour applications électrochimiques

(43) Veröffentlichungstag der Anmeldung: 19.05.2004
(73) Patentinhaber: GKSS-Forschungszentrum Geesthacht GmbH, 21502 Geesthacht (DE)
(72) Erfinder: Alvarez-Gallego Yolanda, 21502 Geesthacht (DE); Pereira Nunes Suzana, 21502 Geesthacht (DE); Jakoby Kai, 40237 Düsseldorf (DE); Prof. Abajo, 28035 Madrid (ES)
(74) Vertreter: Seemann, Ralph

(56) Entgegenhaltungen:
- US-A- 4 113 628
- US-A- 5 525 436
- US-A1- 2001 020 082

## Beschreibung

Die Erfindung betrifft eine ionenleitende Membran für elektrochemische Anwendungen auf Basis eines aromatischen Polyimid- und Copolymid-Polymers sowie deren Verwendung.

Derzeit wird intensiv daran gearbeitet, Brennstoffzellen, die eine sehr vielversprechende Alternative für die Energieumwandlung darstellen, zur Marktreife zu entwickeln. Für die mobile Anwendung hat sich die sogenannte Polyelektrolyt-Membran-Brennstoffzelle (Polyelectrolyte membrane fuel cell; PEFC) als besonders geeignet herausgestellt, man vergleiche F. R. Kalhammer, P. R. Prokopius, V. P. Roan, G. E. Voecks, Status and Prospects of Fuel Cells as Automobile Engines, State of California Air Resources Board, 1998. Ein wesentliches Kriterium, diese Technologie zur Marktreife zu bringen, ist die Verfügbarkeit geeigneter Membrane mit einer hohen Protonenleitfähigkeit, einer niedrigen Brennstoff- bzw. Energieträgerpermeabilität (Wasserstoff oder Methanol) und einer hohen chemischen Stabilität, die jedoch preisgünstig herzustellen sind.

Für Brennstoffzellen wurden bisher sogenannte Nafion®-Membranen, bei denen es sich um fluorierte Membranen von Du Pont handelt, oder ähnlichen Membranen, die von Dow und Asahi in den Handel gebracht wurden, intensiv eingesetzt [O. Savadogo. J. New Materials for Electrochemical Systems 1 (1998) 47].

Einer der wesentlichen Nachteile dieser Nafion®-Membranen ist deren Kosten. Daher wurden verschiedene nicht-fluorierte Membranen in den letzten Jahren in Brennstoffzellen getestet. Die meisten von ihnen basieren auf sulfonierten Polymeren und Copolymeren. Membranen aus sulfoniertem Polysulfon, sulfoniertem Polyetheretherketon, sulfoniertem Polyphosphazen und sulfonierten Polyamiden sind an verschiedenen Stellen beschrieben, man vergleiche Q. Guo, P. N. Pintauro, H. Tang, S. O'Connor, Sulfonated and crosslinked polyphosphazene-based protonexchange membranes. J. Membrane Sci. 154 (1999) 175; E. Vallejo, G. Pourcelly, C. Gavach, R. Mercier and M. Pineri. Sulfonated polyimides as proton conductor exchange membranes. Physicochemical properties and separation H+/Mz+ by electrodialysis comparison with a perfluorosulfonic membrane. J. Membrane Sci. 160 (1999) 127; S. Faure, M. Pineri, P. Aldebert, R. Mercier, B. Sillion, US 6245881 B1.

Ein weiterer Nachteil der Nafion®-Membranen liegt in der Abnahme der Protonenleitfähigkeit oberhalb von 100 °C aufgrund des Wasserentzuges. Ein Betrieb in einem Temperaturbereich von 100 - 150 °C wäre jedoch vorteilhaft, um die Vergiftung des Katalysators durch CO zu reduzieren. Ein Polymer von dem angenommen wird, dass es in diesem Temperaturbereich eingesetzt werden kann, stellt Polybenzimidazol dar, das gewöhnlich mit Phosphorsäure gedopt wird [R. F. Savinell, M. H. Litt. Proton conducting polymers prepared by direct acid casting. US-A-5716727].

Polybenzimidazol (PBI) wurde auch durch Sulfonierung modifiziert, um die Leitfähigkeit unterhalb von 100 °C zu erhöhen [D. J. Jones and J. Rozière. Recent advances in the functionalisation of polybenzimidazole and polyetherketone for fuel applications. J. Membrane Sci. 185 (2001) 41]. Der basische Charakter der Imidazolgruppen spielt hier eine wesentliche Rolle bei dem Transport von Protonen in PBI-Membranen und bei deren guter Leistung oberhalb von 100 °C.

Auch sulfonierte Polyimide wurde bereits auf ihren Einsatz in Brennstoffzellen untersucht [C. Genies, R. Mercier, B. Sillion, N. Cornet, G. Gebel, M. Pineri. Soluble sulfonated naphtalenic polyimides as materials for proton exchange membranes. Polymer 42 (2001) 359 - 373; C. Genies, R. Mercier, B. Sillion, R. Petiaud, N. Cornet, G. Gebel. M. Pineri. Stability study of sulfonated phtalic and naphtalenic polyimide structures in aqueous medium. Polymer 42 (2001) 5097 - 5105]. Die Synthesemöglichkeiten sind zwar sehr flexibel, und es kann eine Vielzahl von Strukturen erhalten werden. Gleichwohl sind die bisher untersuchten Membranen in vielerlei Hinsicht unzureichend.

Aufgabe der vorliegenden Erfindung ist es daher, eine verbesserte Membran bereitzustellen, die für elektrochemische Anwendungen und insbesondere in Brennstoffzellen eingesetzt werden kann.

Gelöst wird diese Aufgabe durch eine ionenleitende Membran gemäß der Lehre der Ansprüche.

Die erfindungsgemäße Membran wird hergestellt aus Polyimid- oder Copolyimid-Polymeren, die in ihrer Struktur heterozyklische Gruppen, insbesondere Imidazol-, Pyridin- und/oder Pyrimidingruppen enthalten. Diese heterezyklischen Gruppen können Teil der Hauptkette sein oder können als Seitenkette unterschiedlicher Größe daran angeknöpft sein.

Die Polyimid- bzw. Copolyimid-Polymere enthalten Einheiten, die gleich oder verschieden sein können und die der folgenden allgemeinen Formel I entsprechen:

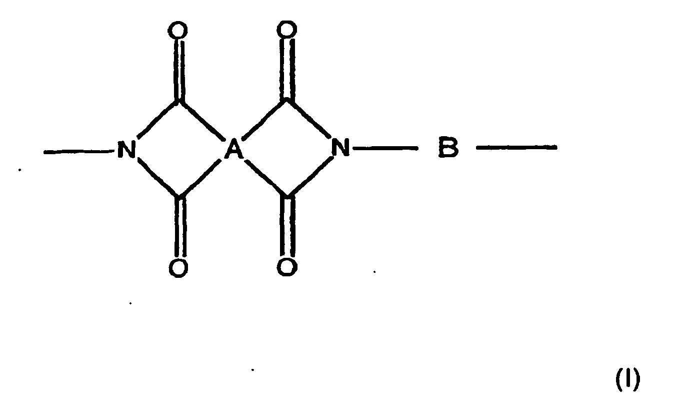

In dieser allgemeinen Formel I bedeutet der Rest B mindestens einen ggf. substituierten aromatischen Heterozyklus der folgenden allgemeinen Formel II:

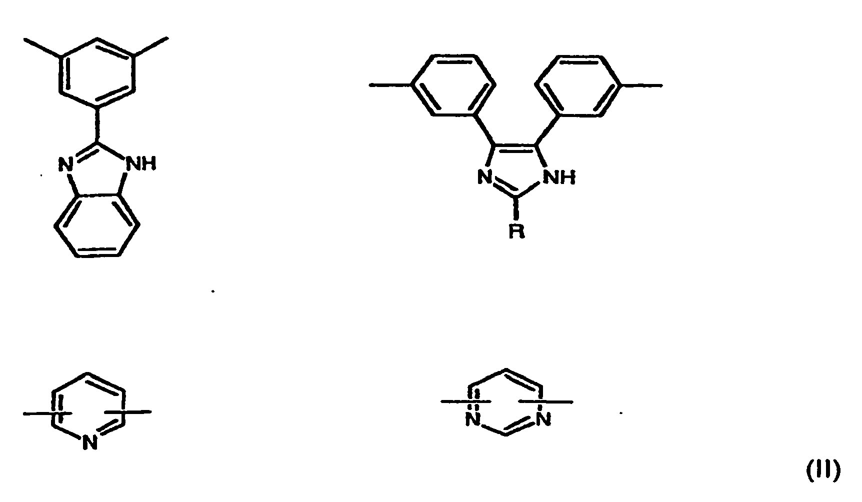

Dabei steht der Rest R für ein Wasserstoffatom, einen Phenyl-Rest, eine Phosphonsäure-Gruppe oder eine mindestens eine Phosphonsäure-Gruppe enthaltende Kette.

Die Gruppe A in der allgemeinen Formel I steht für eine der folgenden, mindestens eine Naphtalin-Einheit enthaltenden Gruppen, der allgemeinen Formel III:

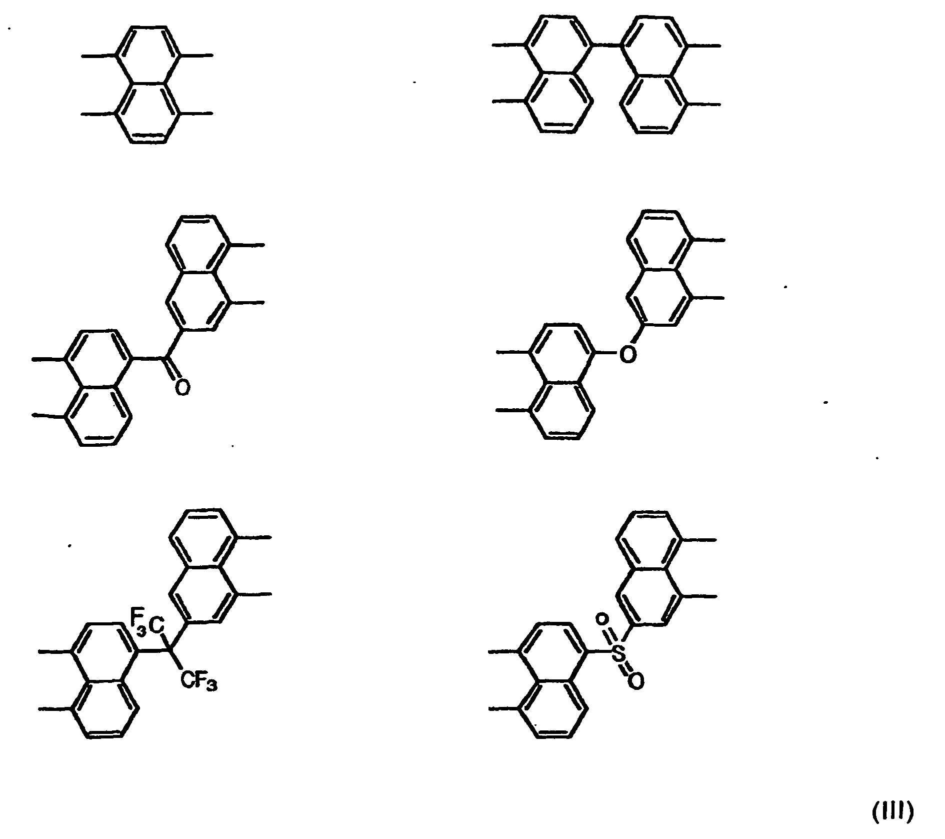

Die Gruppe A bildet mit den benachbarten Imid-Gruppen (man vergleiche die allgemeine Formel I) Ringe mit 6 Atomen.

Vorzugsweise sind die Polymere, aus denen die erfindungsgemäßen Membranen aufgebaut sind, aus wiederkehrenden Einheiten der allgemeinen Formel I aufgebaut.

Die zu Herstellung der erfindungsgemäßen Membran eingesetzten Polymere werden vorzugsweise durch direkte Umsetzung von Diaminen (insbesondere 4,5-di(3-Aminophenyl)imidazol und 5-(2-Benzimidazol)-1,3-phenylenediamin, Diaminopyridinen und/oder Diaminopyrimidinen mit Naphtalin-1,4,5,8-tetracarbonsäuredianhydrid (NTCDA) oder bis(Naphtalinsäureanhydriden) sowie den Disäuren-dialkylester- oder Diacylchlorid-dialkylester-Derivaten dieser Dianhydride.

Das Polymer kann zudem durch Einführung von anderen Gruppen modifiziert sein. Dazu zählen Säuren im allgemeinen und insbesondere Phosphonsäuregruppen, welche unter anderem die Protonenleitfähigkeit erhöhen können. Die Membranen werden vorzugsweise durch Gießen der Lösung des Polymers hergestellt. Ferner ist es möglich, die Membran mit Säuren oder anorganischen Substanzen zu modifizieren, beispielsweise mit Phosphaten, um die Leitfähigkeit zu verbessern.

Die Erfindung wird im folgenden anhand von Beispielen näher erläutert, welche bevorzugte Ausführungsformen betreffen.

### Beispiel 1:

Ein 250 ml Dreihalskolben, der mit einem mechanischen Rührer, einem Einlaß für ein Inertgas (Argon) und einem Dean-Stark System mit einem Kühler und einem Trockenröhrchen an dessen Spitze ausgestattet war, wurde mit 0,4365 g (4 mmol), 2,6-Diaminopyridin, 1,601 g (8 mmol) bis-(4-Aminophenyl)-ether, 3,2182 g (12 mmol) Naphthalin-1,4,5,8-tetracarbonsäuredianhydrid, 7,82 g (64 mmol) Benzoesäure und 45 g m-Kresol beladen. Diese Mischung (dunkelrot gefärbte Lösung) wurde in einem thermostatisierten Silikonölbad 8 h bei 80 °C und 24 h bei 190 °C erhitzt und gerührt. Dann wurden 10 g m-Kresol hinzugegeben, und die Reaktionsmischung wurde auf Raumtemperatur abgekühlt und in Ethylacetat gegossen. Das hellbraune Präzipitat wurde abfiltriert, mit Ethylacetat und danach mit Ethanol gewaschen und im Vakuum bei 80 °C getrocknet.

### Beispiel 2:

In einem 100 ml Dreihalskolben, der mit einem mechanischem Rührer, einem Einlaß für ein Inertgas (Argon) und einem Trockenröhrchen ausgestattet war, wurden 0,1882 g (1 mmol) 2,4-Diaminobenzolsulfonsäure und 0,17 ml (1,2 mmol) trockenes Triethylamin gegeben und bei Raumtemperatur für einige Minuten gerührt. Danach wurden 0,1091 g (1 mmol) 2,6-Diaminopyridin, 0,2002 g (1 mmol) bis-(4-Aminophenyl)-ether, 0,80454 g (3 mmol) Naphthalin-1,4,5,8-tetracarbonsäuredianhydrid und 18 g Benzoesäure hinzugegeben; diese Mischung wurde in einem thermostatisierten Silikonölbad auf 140 °C erhitzt. Nach Schmelzen der Benzoesäure wurde der Rührer angestellt. Die Temperatur wurde auf 160 °C erhöht und die Mischung wurde über Nacht bei dieser Temperatur gerührt. Nach Kühlen auf Raumtemperatur wurde Aceton zu der Mischung hinzugegeben, um Benzoesäure zu lösen und diese danach zu entfernen. Der hellbraune Rückstand wurde abfiltriert, mit Aceton gewaschen und im Vakuum bei 70 °C getrocknet.

### Beispiel 3:

In einen 250 ml Dreihalskolben, der mit einem mechanischen Rührer, einem Einlaß für ein Inertgas (Argon) und einem Dean-Stark System mit einem Kühler und einem Trockenröhrchen an der Spitze davon ausgestattet war, wurden 1,7941 g (8 mmol) 5-(2-Benzimidazol)-1,3-phenylendiamin, 0,8001 g (4 mmol) bis-(4-Aminophenyl)-ether, 3,2182 g (12 mmol) Naphthalin-1,4,5,8-tetracarbonsäuredianhydrid, 2,56 g (21 mmol) Benzoesäure und 45 g m-Kresol gegeben. Diese Mischung wurde unter Rühren in einem thermostatisierten Silikonölbad 4 h auf 80 °C und 20 h auf 190 °C erwärmt. Dann wurden 10 g m-Kresol hinzugefügt, und die Mischung wurde auf Raumtemperatur gekühlt und in Ethylacetat gegossen. Das Präzipitat wurde abfiltriert, mit Ethylacetat und dann mit Ethanol gewaschen und im Vakuum bei 80 °C getrocknet.

Zur Herstellung der erfindungsgemäßen Membranen wird eine Lösung der in den Beispielen 1 bis 3 beschriebenen Polymere hergestellt. Daraus werden die Membranen auf per se bekannte Weise durch Gießen dieser Polymerlösung geformt.

## Patentansprüche

1. Ionenleitende Membran für elektrochemische Anwendungen auf Basis eines aromatischen Polyimid- oder Copolyimid-Polymers, welches Einheiten, die gleich oder verschieden sein können, der folgenden allgemeinen Formel I enthält: 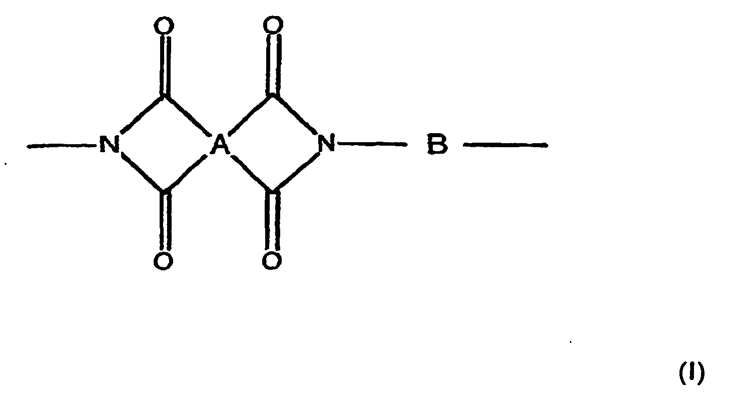
worin der Rest B mindestens einen gegebenenfalls substituierten aromatischen Heterozyklus der folgenden allgemeinen Formel II bedeutet: 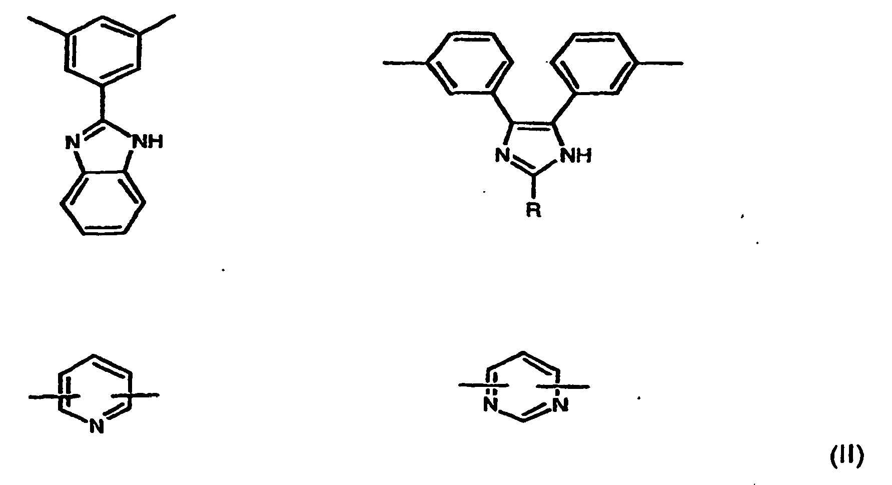
R für H, einen Phenyl-Rest, eine Phosphonsäure-Gruppe oder eine mindestens eine Phosphonsäure-Gruppe enthaltende Kette steht, und
A für eine der folgenden, mindestens eine Napthalin-Einheit enthaltenden Gruppen der allgemeinen Formel III steht: 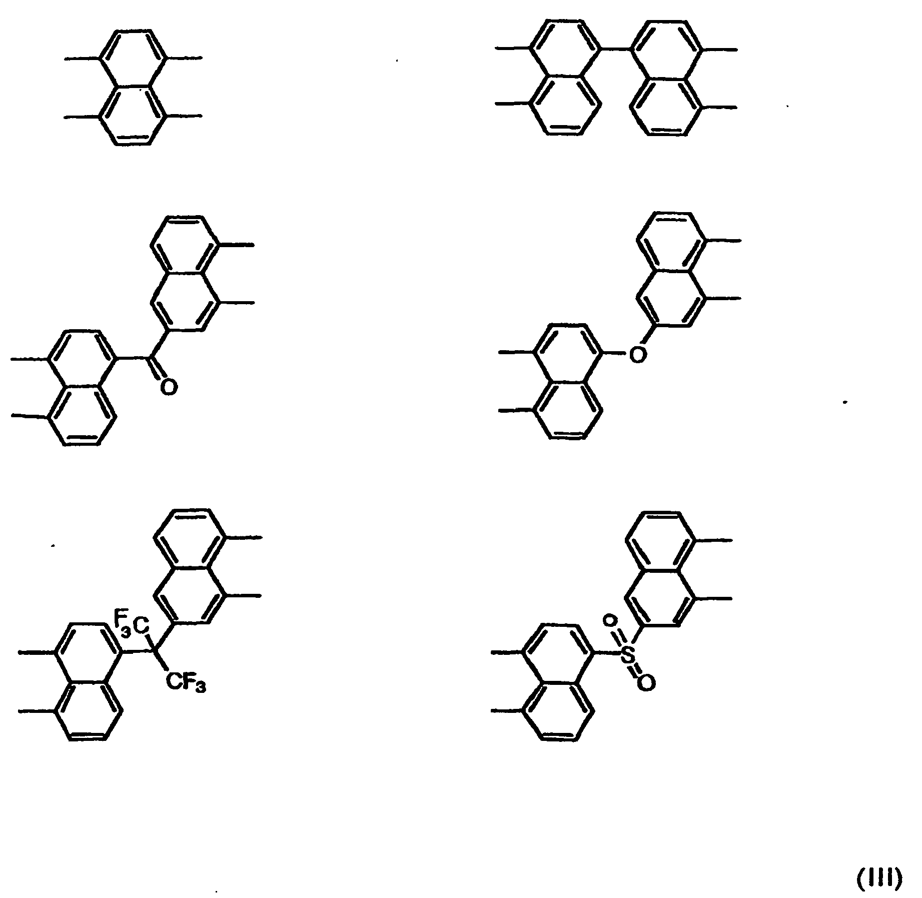 und mit den benachbarten Imid-Gruppen Ringe mit 6 Atomen bildet.

2. Membran nach Anspruch 1,
**dadurch gekennzeichnet, dass**
das Polymer aus wiederkehrenden Einheiten der allgemeinen Formel I aufgebaut ist.

3. Membran nach Anspruch 1 oder 2,
**dadurch** erhältlich, dass
mindestens ein Diamin, Diaminopyridin und/oder Diaminopyrimidin mit Napthalin-1,4,5,8-tetracarbonsäure-dianhydrid, einem bis-(Naphtalin-säureanhydrid) und/oder einem Disäure-dialkylester-oder Diacylchlorid-dialkylester-Derivat dieser Dianhydride direkt umgesetzt wird.

4. Membran nach Anspruch 3,
**dadurch** erhältlich, dass
als Diamin ein 4,5-di(3-Aminophenyl)imidazol und/oder 5-(2-Benzimidazol)-1,3-phenylendiamin eingesetzt wird.

5. Membran nach einem der Ansprüche 1 bis 4,
**dadurch gekennzeichnet, dass**
das Polymer durch Einführen einer anderen Gruppe, insbesondere einer Phosphonsäure-Gruppe, modifiziert ist und/oder die Membran mit einer Säure oder einem anorganischen Modifikator gedopt ist.

6. Membran nach einem der vorhergehenden Ansprüche,
**dadurch gekennzeichnet, dass**
sie mit Hilfe einer Gießlösung der Polyimid- bzw. Copolyimid-Polymers hergestellt wird.

7. Verwendung einer Membran nach einem der vorhergehenden Ansprüche für elektrochemische Anwendungen.

8. Verwendung nach Anspruch 7, wobei die Membran in einer Brennstoffzelle eingesetzt wird.

## Claims

1. Ion-conducting membrane for electrochemical applications with a base of an aromatic polyimide or copolyimide polymer, containing units which may be the same or different, having the following general formula I: 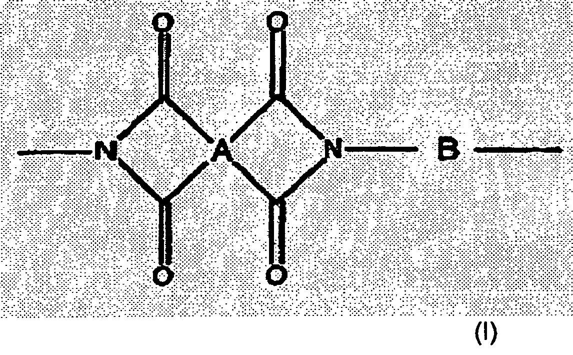
in which residue B stands for at least one aromatic heterocycle, which may or may not be substituted, having the following general formula II: 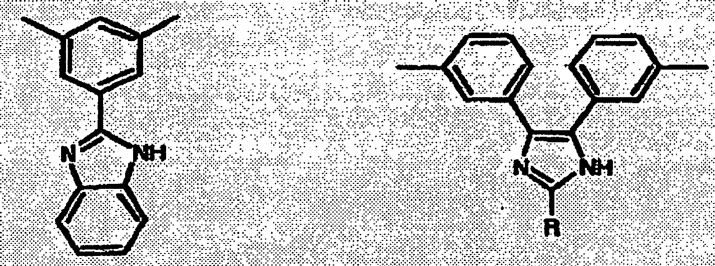 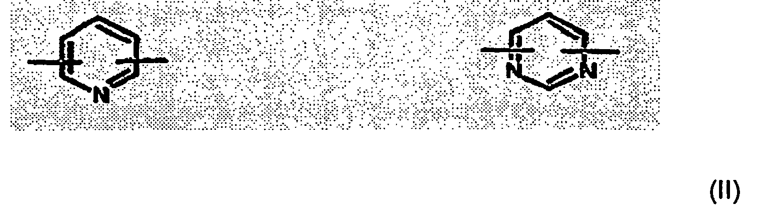
R stands for H, a phenyl residue, a phosphonic acid group or a chain containing at least one phosphonic group, and
A stands for one of the following groups containing at least one naphthalene unit having the general formula III: 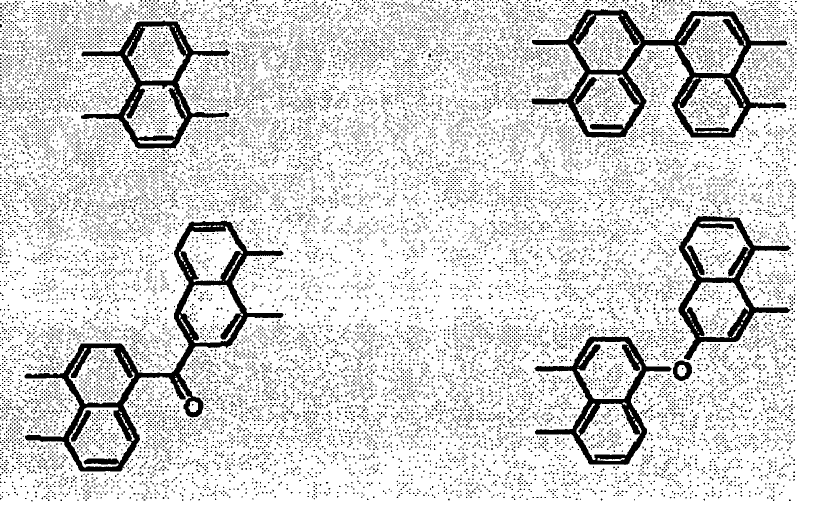 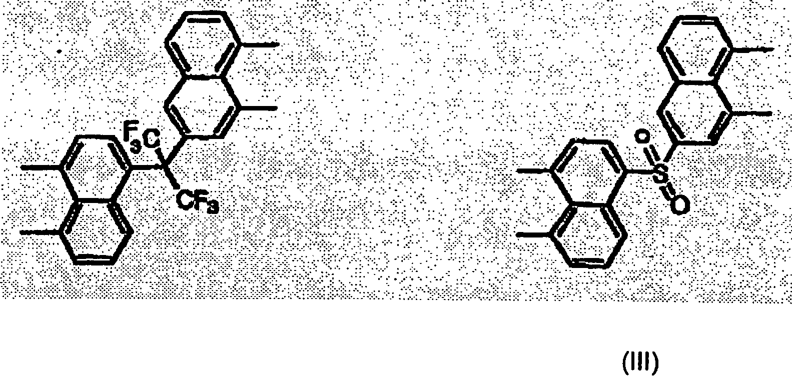 and forms rings with 6 atoms with the adjacent imide groups.

2. Membrane as claimed in claim 1,
**characterised in that**
the polymer is made up of recurring units having the general formula I.

3. Membrane as claimed in claim 1 or 2,
which is obtained by the fact that
at least one diamine, diamino-pyridine and/or diamino-pyrimidine is reacted directly with napthalene-1,4,5,8-tetracarboxylic acid dianhydride, a bis-(naphthalene acid anhydride) and/or a diacid dialkyl ester or diacyl chloride dialkyl ester derivative of these dianhydrides.

4. Membrane as claimed in claim 3,
which is obtained by the fact that
the diamine used is a 4,5-di(3-aminophenyl) imidazole and/or 5-(2-benzimidazole)-1,3-phenylene diamine.

5. Membrane as claimed in one of claims 1 to 4,
**characterised in that**
the polymer is modified by introducing another group, in particular a phosphonic acid group, and/or the membrane is doped with an acid or an inorganic modifier.

6. Membrane as claimed in one of the preceding claims,
**characterised in that**
it is produced with the aid of a casting solution of the polyimide or copolyimide polymer.

7. Use of a membrane as claimed in one of the preceding claims for electrochemical applications.

8. Use as claimed in claim 7, whereby the membrane is used in a fuel cell.

## Revendications

1. Membrane conductrice d'ions pour des mises en oeuvre électrochimiques, à base de polymère polyimide ou co-polyimide aromatique contenant des motifs, pouvant être identiques ou différents, de formule générale I suivante : 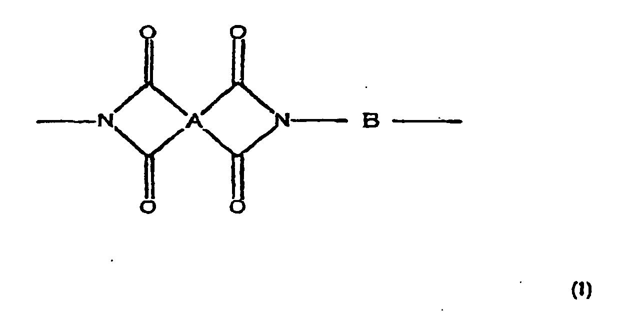
dans laquelle le groupe B représente au moins un hétérocycle aromatique, éventuellement substitué, de formule générale II suivante : 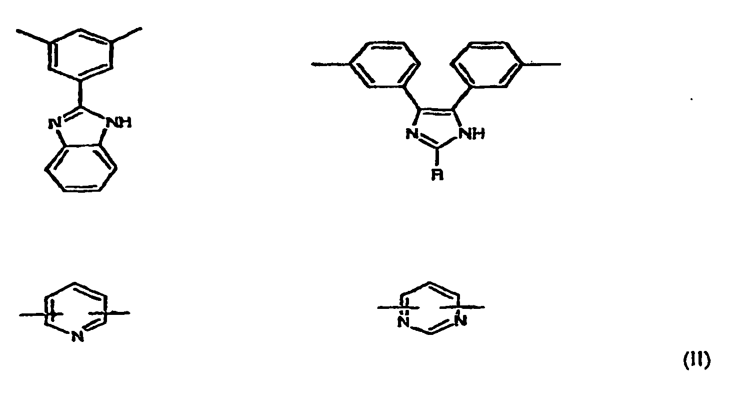
dans laquelle
R représente un atome d'hydrogène, un groupe phényle, un groupe acide phosphonique ou une chaîne contenant au moins un groupe acide phosphonique, et
A représente un des groupes suivants, contenant au moins un motif naphtalène, de formule générale III : 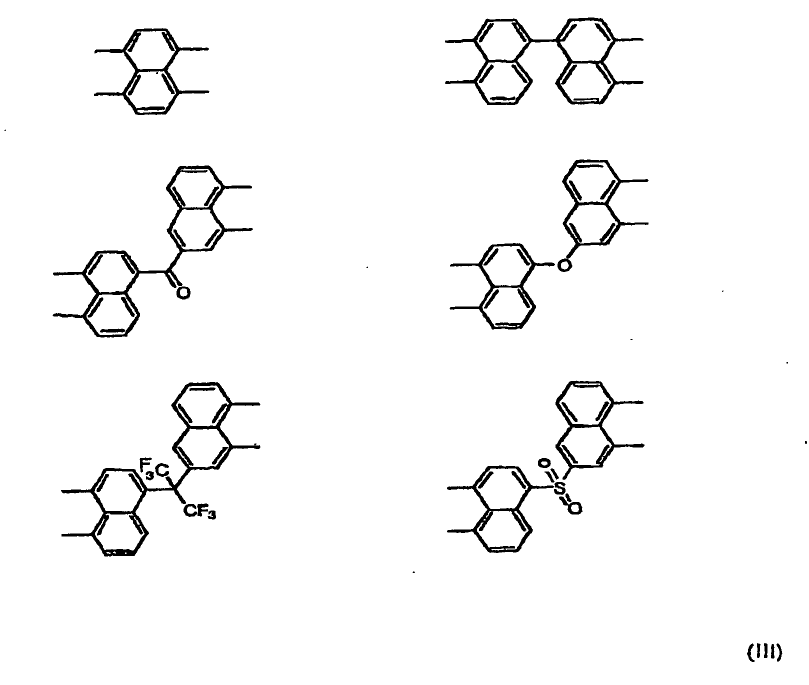 et forme des cycles de 6 atomes avec les groupes imide vicinaux.

2. Membrane selon la revendication 1, **caractérisée en ce que** le polymère est composé de motifs récurrents de formule générale I.

3. Membrane selon la revendication 1 ou 2, pouvant être obtenue en faisant réagir directement au moins une diamine, une diaminopyridine et/ou une diaminopyrimidine avec un dianhydride naphtalène-1,4,5,8-tétracarboxylique, un bis(anhydride naphtalique) et/ou un dérivé ester dialkylique de diacide ou ester dialkylique de diacylchlorure de ces dianhydrides.

4. Membrane selon la revendication 3, pouvant être obtenue en mettant en oeuvre, en tant que diamine, un 4,5-di(3-aminophényl)imidazole et/ou une 5-(2-benzimidazole)-1,3-phénylènediamine.

5. Membrane selon l'une quelconque des revendications 1 à 4, **caractérisée en ce que** le polymère est modifié par l'introduction d'un autre groupe, en particulier d'un groupe acide phosphonique, et/ou la membrane est dopée avec un acide ou un modificateur inorganique.

6. Membrane selon l'une quelconque des revendications précédentes, **caractérisée en ce qu'**elle est fabriquée à l'aide d'une solution de coulée du polymère polyimide ou copolyimide.

7. Utilisation d'une membrane selon l'une quelconque des revendications précédentes pour des mises en oeuvre électrochimiques.

8. Utilisation selon la revendication 7, dans laquelle la membrane est mise en oeuvre dans une pile à combustible.
